# EUROPÄISCHE PATENTSCHRIFT

(11) **EP 1 985 886 B1**
(45) Veröffentlichungstag und Bekanntmachung des Hinweises auf die Patenterteilung: **24.10.2012**
(21) Anmeldenummer: 08103734.3
(22) Anmeldetag: 25.04.2008
(51) Int. Cl.: F16F 9/084

(54) **Messeinrichtung für eine Luftfeder**
Measuring device for a pneumatic spring
Dispositif de mesure pour un ressort à air

(30) Priorität: 27.04.2007 DE 102007020043
(43) Veröffentlichungstag der Anmeldung: 29.10.2008
(73) Patentinhaber: Gudzulic, Miro, 83512 Wasserburg (DE); Veyance Technologies Europe, d.o.o., 4000 Kranj (SI)
(72) Erfinder: Gudzulic, Miro, 83512 Wasserburg (DE); Kosir, Matej, 4290 Trzic (SI); Sivec, Matjaz, 1000 Ljublijana (SI)
(74) Vertreter: Hofstetter, Schurack & Partner

(56) Entgegenhaltungen:
- DE-A1- 10 020 764
- DE-A1-102006 005 471
- FR-A- 2 612 589

## Beschreibung

Die vorliegende Erfindung betrifft eine Messeinrichtung für eine Luftfeder, insbesondere für ein Fahrzeug, der im Oberbegriff des Patentanspruchs 1 angegebenen Art. Eine solche Einrichtung ist aus der FR 2 612 589 A bekannt. Des Weiteren betrifft die Erfindung eine derartige Luftfeder der im Oberbegriff des Patentanspruchs 7 angegebenen Art. Zudem betrifft die Erfindung eine Luftfederung für ein Fahrzeug, insbesondere für einen Kraftwagen.

Aus dem Stand der Technik sind eine große Anzahl von Luftfedern als bekannt zu entnehmen, welche insbesondere zur Luftfederung von Personen- oder Lastkraftwagen eingesetzt werden. Eine derartige Luftfeder ist prinzipiell beispielsweise aus der DE 102 00 632 B4 als bekannt zu entnehmen.

Um die Höhe bzw. Höhenänderung der Luftfeder und somit die Höhe bzw. Neigung des Kraftwagens ermitteln zu können, sind darüber hinaus bereits eine Vielzahl von Messeinrichtungen für derartige Luftfedern als bekannt zu entnehmen. Eine derartige Messeinrichtung ist beispielsweise bereits aus der DE 10 2004 038 239 A1 bekannt, welche auf einem optischen Messprinzip basiert und innerhalb der Luftfeder angeordnet ist. Hierzu ist ein an einer Abdeckplatte eines Rollbalgs angeordneter Reflektor vorgesehen, welcher mit einem oberhalb von diesem angeordneten Sensorelement einer Auswerteeinheit optisch korrespondiert. Das Sensorelement und das als Reflektor ausgebildete Messteil sind dabei infolge der Kraftbeaufschlagung der Luftfeder bzw. des Luftfederbalgs im Fahrbetrieb des Kraftwagens relativ zueinander bewegbar, wobei mittels der Messeinrichtung der entsprechende Höhenabstand bzw. die entsprechende Höhenänderung detektiert wird.

Als problematisch bei derartigen optischen Höhenstandsensoriken ist jedoch der Umstand anzusehen, dass insbesondere der Reflektor verschmutzen kann und demzufolge eine sicherer Betrieb der Messeinrichtung über die gesamte Lebensdauer der Luftfeder nur äußerst schwer zu gewährleisten ist.

Alternativ zu einer optischen Höhenstandsensorik sind zudem bereits Messeinrichtungen bekannt, welche beispielsweise der DE 198 20 877 A1 und der DE 10 2005 037 725 A1 zu entnehmen sind. Dort sind jeweils Ultraschallsensoren vorgesehen, welche den Abstand gegenüber einer Reflektorkomponente oberseitig einer Kolbenstange eines in die Luftfeder integrierten Stoßdämpfers messen. Die Reflektorkomponente ist in einem Fall eben, in einem anderen Fall halbkugelförmig ausgebildet.

Nachteil bei der ebenen Gestaltung der Reflektorkomponente ist es insbesondere, dass schräge Bewegungen des Luftbalgs beispielsweise infolge einer horizontalen Kraftbeaufschlagung der Luftfeder nicht erfasst werden können, was zu einer Fälschung des Messergebnisses führen kann. Nachteilig bei der halbkugelförmigen Gestaltung der Reflektorkomponente ist es hingegen, dass diese durch den üblicherweise bedingten Verschleiß im Laufe der Zeit nicht mehr in ihrer Form erhalten bleibt, was sich entsprechend ebenfalls in Messfehlern niederschlägt.

Aufgabe der vorliegenden Erfindung ist es daher, eine einfache und zuverlässige Messung im Wesentlichen ohne Messfehler bereitstellen zu können.

Diese Aufgabe wird erfindungsgemäß durch eine Messeinrichtung mit den Merkmalen des Patentanspruchs 1 gelöst.

Vorteilhafte Ausgestaltungen mit zweckmäßigen und nicht-trivialen Weiterbildungen der Erfindung sind in den jeweils abhängigen Patentansprüchen angegeben.

Um eine einfache und zuverlässige Messung ohne Messfehler bereitstellen zu können, ist es bei der Messeinrichtung gemäß Patentanspruch 1 vorgesehen, dass das Messteil einer Kolbenstange des Stoßdämpfers zugeordnet ist, wobei zur Ermittlung einer Luftfederhöhe (LH) eine Relativbewegung zwischen der Kolbenstange und dem Sensorelement zu erfassen ist. Mit anderen Worten ist es nach Anspruch 1 erfindungsgemäß vorgesehen, die beispielsweise bei einem Kraftwagen fahrbetriebsbedingte Bewegung der Kolbenstange des Stoßdämpfers unmittelbar dadurch zu erfassen, dass das Messteil der Kolbenstange zugeordnet ist. Somit ergibt sich eine unmittelbare Detektierung der Bewegung bzw. Höhenänderung der Kolbenstange, welche mit der entsprechenden Höhenänderung der Luftfeder insgesamt einhergeht. Im Ergebnis ist somit ersichtlich, dass eine einfache Detektierung der Höhenänderung der Luftfeder dadurch geschaffen ist, dass die entsprechen korrespondierende Bewegung der Kolbenstange erfasst wird.

Als im Rahmen der Erfindung mitumfasst ist es dabei zu betrachten, dass die vorliegende Messeinrichtung nicht nur bei einer Luftfeder für ein Fahrzeug - insbesondere einen Lastkraftwagen oder einen Personenkraftwagen - zum Einsatz kommen kann, sondern darüber hinaus auch bei anderen Fahrzeugen wie Anhängern oder dergleichen. Des Weiteren ist es denkbar, die Messeinrichtung auch bei einer Luftfeder für eine Kabine bzw. ein Fahrerhaus eines Lastkraftwagens einzusetzen. Schließlich ist es denkbar, eine derartige Messeinrichtung auch bei einem Fahrzeugsitz oder dergleichen einzusetzen.

Bei der erfindungsgemäßen Messeinrichtung hat es sich als zudem vorteilhaft gezeigt, dass das Messteil eine magnetische Längenkodierung aufweist, mittels welcher die Relativbewegung zwischen der Kolbenstange und dem Sensorelement zu erfassen ist. Durch eine derartige Längenkodierung kann auf einfache Weise die Bewegung der Kolbenstange erfasst bzw. die Höhe und Höhenänderung der Luftfeder insgesamt ermittelt werden, indem anhand der Bewegung des Messteils ein auswertbares magnetisches Wechselsignal erzeugt wird.

Das Messteil ist dabei durch einen Längenabschnitt der Kolbenstange selbst gebildet. Mit anderen Worten ist die Kolbenstange selbst mit vorzugsweise periodisch wechselnden magnetischen Abschnitten zu versehen bzw. die Kolbenstange entsprechend zu magnetisieren, so dass hierdurch das Messteil mit der entsprechenden Längenkodierung gebildet wird, welche dann durch das Sensorelement erfasst werden kann.

Eine weitere vorteilhafte Ausgestaltung der Erfindung der Messeinrichtung sieht vor, dass das Sensorelement kontaktlos ausgebildet ist und einen Magnetfeldsensor, insbesondere einen Hall-Sensor, umfasst. Mittels eines derartigen Magnetfeldsensors kann auf einfache Weise die Längenkodierung bzw. das sich bei dessen Bewegung ergebende Wechselsignal zur Bewegungs- und Positionsbestimmung ausgewertet werden.

Die vorstehend im Zusammenhang mit der erfindungsgemäßen Messeinrichtung erläuterten Vorteile gelten in ebensolcher Weise für die erfindungsgemäße Luftfeder. Diese zeichnet sich zur einfachen und im Wesentlichen messfehlerfreien Ermittlung der Höhe der Luftfeder bzw. insbesondere des Fahrzeugs zudem dadurch aus, dass das Sensorelement an dem Stoßdämpfer angeordnet oder in diesem integriert ist. Durch eine derartige Anordnung oder Integration des Sensorelements lässt sich eine besonders bauraumsparende und einfach vorfertigbare Baueinheit schaffen.

Als weiterhin vorteilhaft hat es sich gezeigt, wenn das Sensorelement an einem Deckel des Stoßdämpfers angeordnet oder in diesen integriert ist. Hierdurch kann ebenfalls eine bauraumsparende Anordnung geschaffen werden, wobei das Sensorelement über den Deckel einfach montierbar oder entnehmbar am Stoßdämpfer positioniert ist.

In weiterer Ausgestaltung der Erfindung ist der Messeinrichtung eine Steuer- und/oder Regeleinheit zugeordnet, welche innerhalb der Luftfeder, und insbesondere einer Ventilsensoreinheit zugeordnet, innerhalb der Luftfeder angeordnet ist. Hierdurch ergibt sich wiederum eine geschützte und baurraumsparende Anordnung der Messeinrichtung - bzw. gegebenenfalls der Ventilsensoreinheit - innerhalb der Luftfeder.

Weiterhin vorteilhaft ist es, wenn die Steuer- und/oder Regeleinheit mit dem Sensorelement über eine Leitung verbunden ist, welche innerhalb der Luftfeder verläuft. Eine derartige Leistung kann besonders robust ausgestaltet sein, wobei deren sichere Anordnung innerhalb der Luftfeder zudem einen reibungslosen Betrieb der Messeinrichtung sicherstellt. Ein weiterer Vorteil einer derartigen Leitung ist es darüber hinaus, dass das Sensorelement über die Leitung mit einer Stromversorgung verbunden werden kann.

Die Steuer- und/oder Regeleinheit ist in weiterer Ausgestaltung der Erfindung bevorzugt mit dem Sensorelement über eine Sender-Empfänder-Einheit verbunden, so dass die beiden Bauteile ohne die Verwendung einer Leitung miteinander kommunizieren können. Hierdurch kann insbesondere die gestalterische Freiheit zur Anordnung der Steuer- und/oder Regeleinheit deutlich erhöht werden.

Zudem vorteilhaft ist es, wenn der Messeinrichtung eine Steuer- und/oder Regeleinheit zugeordnet ist, welche im Wesentlichen außerhalb der Luftfeder, und insbesondere an einer Abdeckplatte, angeordnet ist. Diese Anordnung kann beispielsweise gewählt werden, wenn die Federbalge der Luftfedern entsprechend klein bemessen sein sollen, so dass die Steuer- und/oder Regeleinheiten keinen Platz innerhalb der Luftfeder finden. Dabei kann die Steuer- und/oder Regeleinheit außerhalb der Luftfeder in eine Ventilsensoreinheit integriert sein, um eine geschützte und kompakte Anordnung zu erzielen.

Weitere Vorteile, Merkmale und Einzelheiten der Erfindung ergeben sich aus der folgenden Beschreibung bevorzugter Ausführungsbeispiele sowie anhand der Zeichnungen; diese zeigen in:

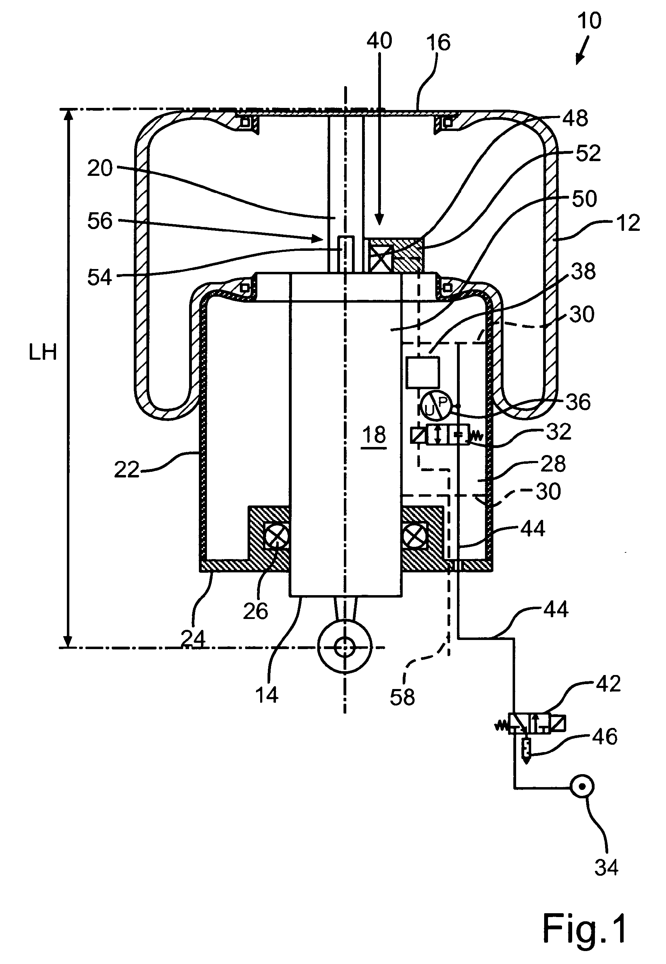

- Figur 1: eine schematische Schnittansicht auf eine einen Stoßdämpfer mit Kolbenstange umfassende Luftfeder für einen Kraftwagen, wobei innerhalb der Luftfeder ein oberseitig eines Dämpferzylinders des Stoßdämpfers angeordnetes Sensorelement angeordnet ist, welches mit einem korrespondierenden, der Kolbenstange des Stoßdämpfers zugeordneten Messteil derart zusammenwirkt, dass ein am kolbenstangenseitigen Messteil mittels einer magnetischen Längenkodierung erzeugtes Wechselsignal infolge der Relativbewegung der Kolbenstange mittels des Sensorelements erfassbar ist;

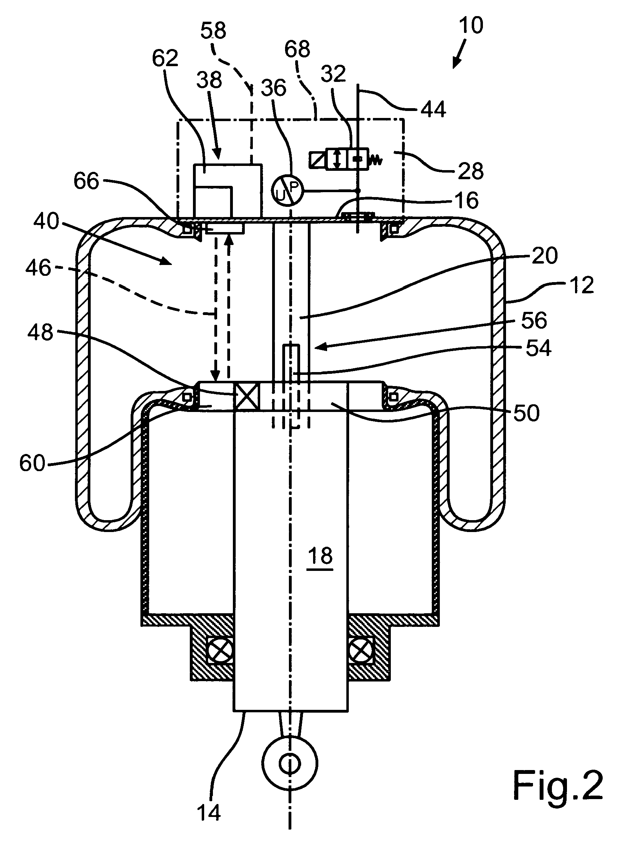

- Figur 2: eine schematische Schnittansicht auf die Luftfeder gemäß Figur 1, wobei insbesondere eine alternative Messeinrichtung vorgesehen ist, bei welcher das Sensorelement über eine Sender-Empfänger-Einheit mit einer im Wesentlichen außerhalb der Luftfeder angeordneten Steuer- und/oder Regeleinheit kommuniziert, wobei die Steuer- und/oder Regeleinheit in eine die Luftzufuhr bzw. -abfuhr der Luftfeder regulierende, dezentrale Ventilsensoreinheit integriert ist;

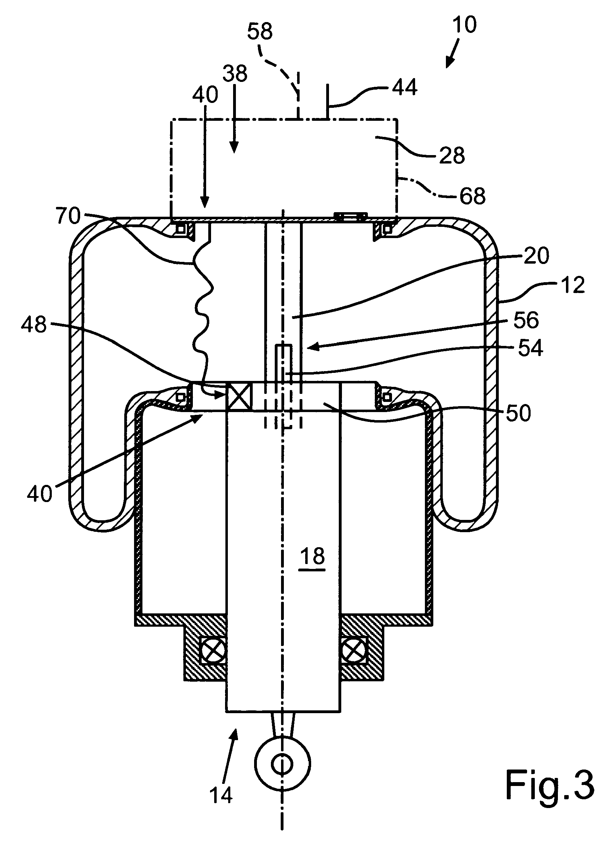

- Figur 3: eine schematische Schnittansicht auf die Luftfeder gemäß den Figuren 1 und 2, wobei analog zu Figur 2 die Steuer- und/oder Regeleinheit innerhalb der Ventilsensoreinheit wieder außerhalb der Luftfeder angeordnet ist, und wobei die Steuer- und/oder Regeleinheit mit dem Sensorelement über eine stromversorgende Leitung verbunden ist;

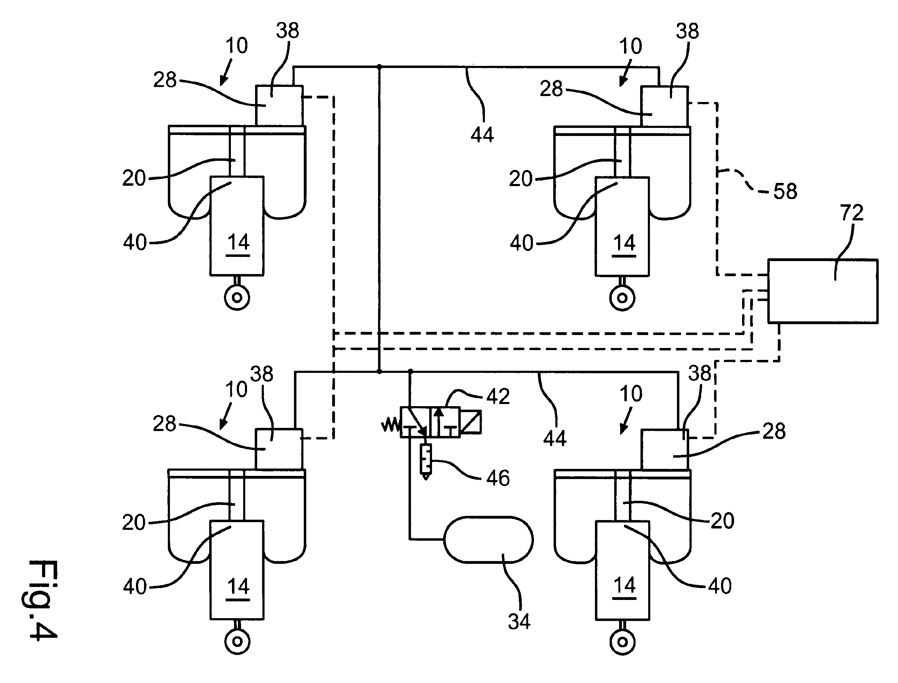

- Figur 4: eine schematische Darstellung einer vier Luftfedern mit jeweiligen Ventilsensoreinheiten und jeweiligen Messeinrichtungen umfassenden Luftfedern, wobei eine zentrale Steuerung der Luftfederung vorgesehen ist, welche mit den dezentralen Steuer- und/oder Regeleinheiten der zugeordneten Luftfedern kommuniziert; und in

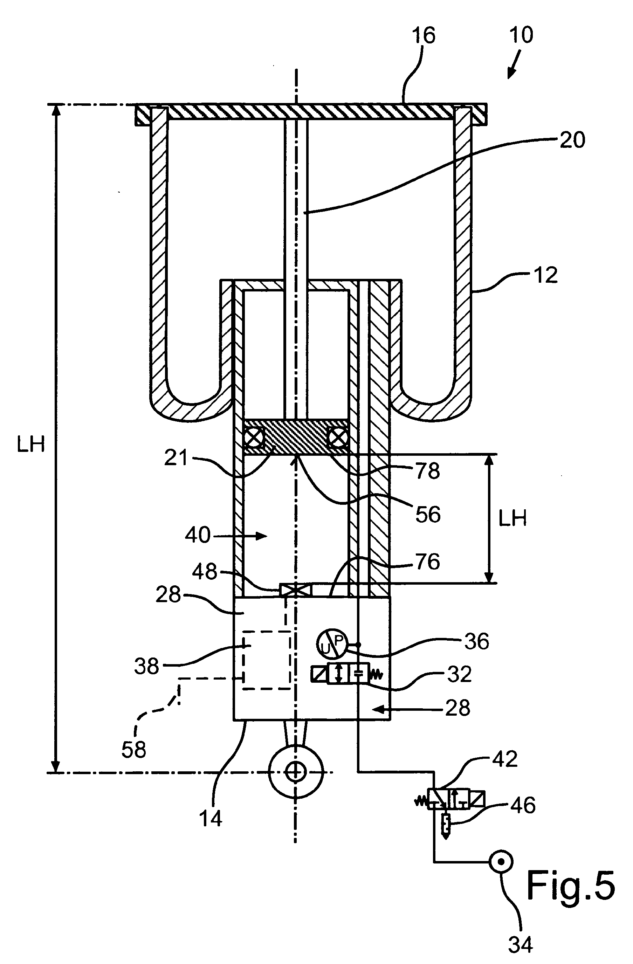

- Figur 5: eine schematische Schnittansicht auf die Luftfeder gemäß den Figuren 1 bis 3, wobei eine nicht erfindungsgemäße Messeinrichtung vorgesehen ist, bei welcher das Sensorelement eine Sender-Empfänger-Einheit umfasst, mittels welcher elektromagnetische Wellen, und insbesondere Mikrowellen, in Richtung des an einer Stirnseite des Kolbens angeordneten, als Reflexionselement ausgebildeten Messteils zu senden bzw. die reflektierten Wellen zu empfangen sind.

In den Figuren 1 bis 3 ist jeweils in einer schematischen Schnittansicht eine Luftfeder 10 bzw. ein Luftfederbein in einer in Vertikalrichtung verlaufenden Schnittansicht dargestellt. Die Luftfeder 10 ist dabei im vorliegenden Fall beispielsweise bei einem Lastkraftwagen oder Personenkraftwagen eingesetzt werden. Gleichfalls wäre es jedoch auch denkbar, die vorliegende Luftfeder 10 für eine Fahrerhauslagerung oder eine Fahrzeugsitzlagerung einzusetzen.

Wie aus den Figuren 1 bis 3 erkennbar wird, besteht die Luftfeder 10 im Wesentlichen aus einem Rollbalg 12, innerhalb welchem ein Stoßdämpfer 14 aufgenommen ist. Der Rollbalg 12 ist dabei einerseits gegenüber dem Stoßdämpfer 14 und anderseits gegenüber einer Abdeckplatte 16 zum Befestigen der Luftfeder 10 am Fahrzeugaufbau abdichtend angeschlossen. Ein den Rollbalg 12 umgebender Haltezylinder ist darüber dabei in den Figuren 1 bis 3 nicht dargestellt.

Der Stoßdämpfer 14 umfasst einen Dämpferzylinder 18 innerhalb welchem eine axial oszilierbare Kolbenstange 20 eines Kolbens 21 (Fig. 5) aufgenommen ist. Der Dämpferzylinder 18 des Stoßdämpfers 14 ist koaxial innerhalb eines Aufnahmezylinders 22 aufgenommen, welcher durch einen Deckel 24 nach unten hin verschlossen ist. Zwischen dem Deckel 24 und dem Dämpferzylinder 18 ist dabei eine radial umlaufende Dichtung 26 vorgesehen, in deren Bereich der Stoßdämpfer 14 den Deckel 24 hindurchragt. Unterseitig des Deckels 24 ist ein Zusatzring 80 erkennbar, welcher den Zusammenbau mit dem Rollbalg 12 und dem Aufnahmezylinder 22 gegenüber dem Stoßdämpfer 14 abstützt.

Das obere Ende der Kolbenstange 20 ist auf nicht detaillierter dargestellte Weise - beispielsweise unter Vermittlung einer entsprechenden Aufhängung - mit der Abdeckplatte 16 verbunden. Somit sind die Figuren 1 bis 3 lediglich als in diesem Punkt schematische Darstellung zu betrachten.

In Figur 1 ist nun erkennbar, dass innerhalb der Luftfeder 10, genauer gesagt innerhalb des Aufnahmezylinders 22, eine Ventilsensoreinheit 28 angeordnet ist. Die Begrenzung der Ventilsensoreinheit 28 ist mit gestrichelten Linien 30 nach oben und unten hin schematisch angedeutet. Eine derartige Ventilsensoreinheit 28 ist beispielsweise bereits aus der DE 10 2006 005 471 A1 als bekannt zu entnehmen, deren Offenbarungsgehalt hiermit ausdrücklich als mitumfasst zu betrachten ist. Die Ventilsensoreinheit 28 umfasst unter anderem ein Halteventil 32, welches in der in der DE 10 2006 005 471 A1 beschriebenen Weise durch ein nicht erkannbares Pilotventil zu beaufschlagen ist, an welchem Druckluft aus einem zentralen Druckluftspeicher 34 oder aus der Luftfeder 10 anliegt. Zudem umfasst die Ventilsensoreinheit 28 auf in der DE 10 2006 005 471 A1 beschriebene Weise einen Druckregler, über welchen zumindest die Druckluft aus der Luftfeder 10, vorzugsweise jedoch aus dem Druckluftspeicher 34, zu regeln bzw. zu vermindern ist. Hierdurch kann erreicht werden, dass ein Pilotventil mit kleiner Magnetspulenleistung eingesetzt werden kann. Durch den Einsatz des Druckluftspeichers 34 hinter dem nicht dargestellten Druckluftregler und vor dem Pilotventil ist es zudem möglich, das Halteventil 32 zu schalten, auch wenn der Druck in der Luftfeder 10 fast Null beträgt.

Neben dem magnetisch schaltbaren Halteventil 32 ist von der Ventilsensoreinheit 28 ein Drucksensor 36 erkennbar, mittels welchem ein Druck innerhalb der Luftfeder 10 - genauer gesagt innerhalb des Aufnahmezylinders 22 - zu ermitteln ist und dessen Funktion im Zusammenhang mit dem Gegenstand gemäß DE 10 2006 005 471 A1 bereits beschrieben ist. Schließlich ist von der Ventilsensoreinheit 28 explizit eine Steuer- und/oder Regeleinheit 38 einer im Weiteren noch näher erläuterten Messeinrichtung 40 dargestellt, welche vorliegend unmittelbar in die Ventilsensoreinheit 28 integriert ist. Die Ventilsensoreinheit 28 ist schließlich über ein Hauptventil 42 mit dem Druckluftspeicher 34 über die Druckluftleitung 44 verbunden, so dass vorliegend lediglich ein Anschluss innerhalb des Deckels 24 der Luftfeder 10 vorgesehen werden muss. Im Bereich des Hauptventils 42 ist dabei ein Schalldämpfer 46 erkennbar.

Die Steuer- und/oder Regeleinheit 38, welche innerhalb der Ventilsensoreinheit 28 angeordnet ist, ist Teil der Messeinrichtung 40, welche darüber hinaus als wesentliches Bauteil ein Sensorelement 48 umfasst, welches - an die Kolbenstange 20 angrenzend - bei der Ausführungsform gemäß Figur 1 oberseitig eines Deckels 50 des Dämpferzylinders 18 festgelegt ist. Hierzu dient ein Sensorträger 52.

Das Sensorelement 48 korrespondiert mit einer schematisch angedeuteten magnetischen Längenkodierung 54 eines Messteils 56, welches einer Kolbenstange 20 zugeordnet ist. Das Messteil ist durch einen Längenabschnitt der Kolbenstange 20 selbst gebildet. Die Längenkodierung 54 ist im vorliegenden Fall dadurch gebildet, dass in einer konstanten Periode wechselnd magnetische Abschnitte angeordnet sind. Diese magnetisch wechselnden Abschnitte erzeugen bei einer Bewegung der Kolbenstange - insbesondere infolge einer Kraftbeaufschlagung im Fahrbetrieb des Kraftwagens - ein Wechselsignal, welches zur Höhenbestimmung bzw. Ermittlung einer Luftfederhöhe LH der Luftfeder 10 herangezogen wird. Ein derartiges System zeichnet sich dabei insbesondere durch seine kostengünstige Fertigung und seine zuverlässige Erzeugung von Messergebnissen aus.

Im vorliegenden Ausführungsbeispiel ist das Sensorelement 48, welches vorliegend als Magnetfeldsensor in Form eines Hall-Sensors ausgebildet ist, über eine Elektroleitung 58 der Ventilsensoreinheit 28 - und dort insbesondere mit der Steuer- und/oder Regeleinheit 38 verbunden. Über die Steuer- und/oder Regeleinheit 38 sind wiederum die Ventile der Ventilsensoreinheit 28 - also insbesondere das gezeigte Halteventil 32 und das nicht gezeigte Pilotventil - steuerbar. Die Elektroleitung 58 tritt vorliegend im Bereich der Druckluftleitung 44 aus dem Deckel 24 aus.

Insgesamt ist somit erkennbar, dass die Kolbenstange 20 mit einer permanentmagnetischen Kodierung versehen ist, wobei der kontaktlose Magnetfeldsensor des Sensorelements 48 durch Impulszählung der im Bereich des Messteils 56 an die Kolbenstange 20 angebrachten Längenkodierung 54 deren Bewegung überwacht und somit den Hub bzw. die lediglich schematisch angedeutete Luftfederhöhe LH bzw. der Änderung misst.

Die Ausführungsform gemäß Figur 2 unterscheidet sich von derjenigen gemäß Figur 1 insbesondere dadurch, dass das Sensorelement 48 unmittelbar in den Deckel 50 des Dämpferzylinders 18 integriert ist. Natürlich wären auch andere Anordnungen innerhalb des Dämpferzylinders 18 denkbar. Dem Sensorelement 48 ist ein Bauteil 60 einer Sender-Empfänger-Einheit 62 zugeordnet, welches - wie mit den Strichlinien 64 dargestellt - mit einem weiteren Bauteil 66 der Sender-Empfänger-Einheit 62 kommuniziert, welches seinerseits unterseitig der Abdeckplatte 16 bzw. innerhalb des Rollbalgs 12 angeordnet ist. Das Bauteil 66 ist der Steuer- und/oder Regeleinheit 38 zugeordnet, welche im vorliegenden Fall - gemeinsam mit der durch die strichpunktierten Linien 68 symbolisierte Ventilsensoreinheit 28 - oberseitig der Abdeckplatte 16 angeordnet ist. Mit anderen Worten ist vorliegend die Ventilsensoreinheit 28 außerhalb der Luftfeder 10 bzw. des Rollbalgs 12 angeordnet, wobei der Ventilsensoreinheit 28 wiederum die Steuer- und/oder Regeleinheit 38 zugeordnet ist. Somit ist vorliegend eine Variante dargestellt, bei welcher das mittels des Sensorelements 48 ermittelte Signal durch die Sender-Empfänger-Einheit 62 zur Ventilsensoreinheit 28 übermittelt wird.

Aus Figur 2 ist darüber hinaus erkennbar, dass das der Steuer- und/oder Regeleinheit 38 zugeordnete Bauteil 66 auf einfache Weise dadurch positioniert werden kann, dass die Ventilsensoreinheit 28 oberhalb der Abdeckplatte positioniert wird und das Bauteil 66 durch diese hindurchgesteckt wird. Somit ist eine einfache Nachrüstlösung gegeben. Des Weiteren ist wiederum das Halteventil 42 sowie deren Druckluftsensor 36 erkennbar, welcher ebenfalls durch eine Öffnung innerhalb der Abdeckplatte 16 mit dem Gasraum des Rollbalgs 12 kommunizieren kann. Die weiteren pneumatischen Bauteile der Ventilsensoreinheit 28 sind in Figur 2 nicht erkennbar, jedoch ist auch vorliegend wieder ein prinzipieller Aufbau gewählt, welcher aus der DE 10 2006 005 471 A1 bekannt ist.

Die Sender-Empfänger-Einheit 62 ist im vorliegenden Fall in RFID-Technologie ausgeführt, wobei die Energieversorgung beispielsweise über einen Reader erfolgt, welcher in das Bauteil 66 integriert ist.

Alternativ zu der in Figur 2 dargestellten Sender-Empfänger-Einheit 62 ist es bei der Ausführungsform gemäß Figur 3 vorgesehen, das Sensorelement 48 über eine Leitung 70 mit der Steuer- und/oder Regeleinheit 38 zu verbinden. Diese Leitung 70 kann zudem zur Stromversorgung des Sensorelements 48 genutzt werden. Es ist erkennbar, dass die Leitung 70 vorliegend mäanderförmig ausgebildet ist, so dass ein entsprechender Hub ausgeglichen werden kann. Natürlich ist auch klar, dass die Leitung 70 entsprechend flexibel gestaltet ist.

Schließlich ist in Figur 4 in einer schematischen Darstellung eine Schaltungsanordnung einer Luftfederung für einen Kraftwagen, vorliegend einen Lastkraftwagen, mit vier Luftfedern 10 gezeigt. Die vier Luftfedern 10 umfassen eine jeweils zugeordnete Ventilsensoreinheit 28, welcher auf vorbeschrieben Weise jeweils eine korrespondierende Steuer- und/oder Regeleinheit 38 zugeordnet ist. Die vier Ventilsensoreinheiten 28 sind über jeweilige Druckluftleitungen 44 untereinander bzw. mit dem bereits in Figur 1 erläuterten Hauptventil 42 sowie dem zentralen Druckluftspeicher 34 verbunden.

Darüber hinaus sind die jeweiligen Steuer- und/oder Regeleinheiten 38 der vier Luftfedern 10 - wie gestrichelt angedeutet - über die jeweiligen Elektroleitungen 58 mit einer zentralen Steuerung 72 der Luftfederung des Kraftwagens verbunden.

Somit ist aus Figur 4 erkennbar, dass jede der Luftfedern 10 durch die jeweils separate Elektronik der Steuer- und/oder Regeleinheit 38 separat zu regeln ist. Die zentrale Steuerung 72 hingegen wirk als Master, welche einen gewünschten Wert für die benötigte jeweilige Höhe der Luftfeder 10 an deren jeweilige Elektronik der Steuer- und/oder Regeleinheit 38 übermittelt. Durch die Ventilsensoreinheit 28 als Slave-Modul wird die durch die zentrale Steuerung 72 vorgegebene und durch die jeweilige Steuer- und/oder Regeleinheit 38 geregelte Höhe der Luftfeder eingestellt. Die Überwachung der Höhe erfolgt ebenfalls mittels der jeweiligen Steuer- und/oder Regeleinheit 38.

Mit anderen Worten ist vorliegend ein Verfahren zur Steuerung der Luftfederung des Kraftwagens geschaffen, wobei die zentrale Steuerung 72 als Master wirkt und einen bestimmten Weg für die Luftfederbeinhöhe an die jeweils dezentrale Elektronik der Steuer- und/oder Regeleinheit 38 jeder der Luftfedern weitergibt, wobei deren Höhensteuerung in Abhängigkeit des gemessenen Werts an der Kolbenstange 20 erfolgt. Mit anderen Worten ist vorliegend eine dezentrale Niveauregulierung möglich, wobei die Steuerung 72 lediglich als Master wirkt, um die gewünschten Höhenwerte an die einzelnen Steuer- und/oder Regeleinheiten 38 zu übermitteln.

In Figur 5 ist in einer schematischen Schnittansicht die Luftfeder 10 gemäß den Figuren 1 bis 3 gezeigt, wobei eine nicht erfindungsgemäße Messeinrichtung 40 vorgesehen ist, bei welcher das Sensorelement 48 an einer Stirnseite 76 innerhalb des Dämpferzylinders 18 angeordnet ist und eine Sender-Empfänger-Einheit umfasst, mittels welcher elektromagnetische Wellen, und insbesondere Mikrowellen, in Richtung des an einer Stirnseite 78 des Kolbens 21 angeordneten, als Reflexionselement ausgebildeten Messteils 56 zu senden bzw. die reflektierten Wellen zu empfangen sind. Somit ist erkennbar, zur Ermittlung der Luftfederhöhe LH bzw. von deren Änderung de Relativbewegung zwischen dem Kolben 21 und dem Sensorelement 48 zu erfassen ist. Dies erfolgt vorliegend wiederum mittels der Steuer- und/oder Regeleinheit 38, welche mit dem Sensorelement 48 bzw. der Sender-Empfänger-Einheit verbunden ist. Die Steuer- und/oder Regeleinheit 38 und das Sensorelement 48 sind vorliegend als Teil der Ventilsensoreinheit 28 ausgebildet, welche unterseitig des Dämpferzylinders 18 angeordnet ist und die bereits beschriebenen Bauteile (Ventile etc.) umfasst.

## Patentansprüche

1. Messeinrichtung mit einem Kolben (21) sowie einer Kolbenstange (20) eines Stoßdämpfers (14) für eine Luftfeder (10), insbesondere für ein Fahrzeug, mit einem an der Luftfeder (10) anordnenbaren Sensorelement (48) und mit einem mit diesem korrespondierenden Messteil (56), welches relativ zu dem Sensorelement (48) bewegbar ist, wobei das Messteil (56) der Kolbenstange (20) des Stoßdämpfers (14) zugeordnet ist, und wobei eine Längenkodierung (54) des Messteils (56) mit dem an die Kolbenstange (20) angrenzenden Sensorelement (48) korrespondiert,
**dadurch gekennzeichnet, dass** die Lägentrodierung eine magnetische Längentrodierung ist und
dass das Messteil (56) durch einen Längenabschnitt der Kolbenstange (20) selbst gebildet ist, wobei zur Ermittlung einer Luftfederhöhe (LH) der Luftfeder (10) eine Relativbewegung zwischen der Kolbenstange (20) und dem Sensorelement (48) zu erfassen ist.

2. Messeinrichtung nach Anspruch 1,
**dadurch gekennzeichnet,**
**dass** die Längenkodierung (54) wechselnd magnetisierte Abschnitte umfasst.

3. Messeinrichtung nach Anspruch 1 oder 2,
**dadurch gekennzeichnet,**
**dass** das Sensorelement (48) kontaktlos ausgebildet ist und einen Magnetfeldsensor, insbesondere einen Hall-Sensor, umfasst.

4. Luftfeder mit einer Messeinrichtung (40) nach einem der Ansprüche 1 bis 3.

5. Luftfeder nach Anspruch 4,
**dadurch gekennzeichnet,**
**dass** das Sensorelement (48) an dem Stoßdämpfer (14) angeordnet oder in diesen integriert ist.

6. Luftfeder nach Anspruch 5,
**dadurch gekennzeichnet,**
**dass** das Sensorelement (48) an einem Deckel (50) des Stoßdämpfers (14) angeordnet oder in diesen integriert ist.

7. Luftfeder nach einem der Ansprüche 4 bis 6,
**dadurch gekennzeichnet,**
**dass** der Messeinrichtung (40) eine Steuer- und/oder Regeleinheit (38) zugeordnet ist, welche innerhalb der Luftfeder (10), und insbesondere einer Ventilsensoreinheit (28) zugeordnet, innerhalb der Luftfeder (10) angeordnet ist.

8. Luftfeder nach einem der Ansprüche 4 bis 7,
**dadurch gekennzeichnet,**
**dass** die Steuer- und/oder Regeleinheit (38) mit dem Sensorelement (48) über eine Leitung (70) verbunden ist, welche innerhalb der Luftfeder (10) verläuft.

9. Luftfeder nach Anspruch 8,
**dadurch gekennzeichnet,**
**dass** das Sensorelement (48) über die Leitung (70) mit einer Stromversorgung verbunden ist.

10. Luftfeder nach einem der Ansprüche 4 bis 7,
**dadurch gekennzeichnet,**
**dass** die Steuer- und/oder Regeleinheit (38) mit dem Sensorelement (48) über eine Sender-Empfänger-Einheit (62) verbunden ist.

11. Luftfeder nach einem der Ansprüche 4 bis 6,
**dadurch gekennzeichnet,**
**dass** der Messeinrichtung (40) eine Steuer- und/oder Regeleinheit (38) zugeordnet ist, welche im Wesentlichen außerhalb der Luftfeder (10), insbesondere an einer Abdeckplatte (16), angeordnet ist.

12. Luftfeder nach Anspruch 11,
**dadurch gekennzeichnet,**
**dass** die Steuer- und/oder Regeleinheit (38) in eine Ventilsensoreinheit (28) integriert ist, welche im Wesentlichen außerhalb der Luftfeder (10), insbesondere an der Abdeckplatte (16), angeordnet ist.

## Claims

1. Measuring device comprising a piston (21) and a piston rod (20) of a shock absorber (14) for a pneumatic spring (10), in particular for a vehicle, comprising a sensor element (48) which can be arranged on the pneumatic spring (10) and comprising a measuring part (56) which corresponds to the sensor element (48) and can be moved relative thereto, the measuring part (56) being assigned to the piston rod (20) of the shock absorber (14), and a length coding (54) of the measuring part (56) corresponding to the sensor element (48) adjacent to the piston rod (20),
**characterised in**
**that** the length coding is a magnetic length coding and in that the measuring part (56) is formed by a length portion of the piston rod (20) itself, a relative movement between the piston rod (20) and the sensor element (48) needing to be detected in order to determine a pneumatic spring height (LH) of the pneumatic spring (10).

2. Measuring device according to claim 1,
**characterised in**
**that** the length coding (54) comprises alternately magnetised portions.

3. Measuring device according to either claim 1 or claim 2,
**characterised in**
**that** the sensor element (48) is designed to be non-contacting and comprises a magnetic field sensor, in particular a Hall sensor.

4. Pneumatic spring comprising a measuring device (40) according to any of claims 1 to 3.

5. Pneumatic spring according to claim 4,
**characterised in**
**that** the sensor element (48) is arranged on or integrated in the shock absorber (14).

6. Pneumatic spring according to claim 5,
**characterised in**
**that** the sensor element (48) is arranged on or integrated in a cover (50) of the shock absorber (14).

7. Pneumatic spring according to any of claims 4 to 6,
**characterised in**
**that** the measuring device (40) is assigned an open- and/or closed-loop control unit (38) which is arranged inside the pneumatic spring (10), and in particular assigned to a valve sensor unit (28), inside the pneumatic spring (10).

8. Pneumatic spring according to any of claims 4 to 7,
**characterised in**
**that** the open- and/or closed-loop control unit (38) is connected to the sensor element (48) via a line (70) which extends inside the pneumatic spring (10).

9. Pneumatic spring according to claim 8,
**characterised in**
**that** the sensor element (48) is connected to a power supply via the line (70).

10. Pneumatic spring according to any of claims 4 to 7,
**characterised in**
**that** the open- and/or closed-loop control unit (38) is connected to the sensor element (48) via a transceiver unit (62).

11. Pneumatic spring according to any of claims 4 to 6,
**characterised in**
**that** the measuring device (40) is assigned an open- and/or closed-loop control unit (38) which is arranged substantially outside the pneumatic spring (10), in particular on a cover plate (16).

12. Pneumatic spring according to claim 11,
**characterised in**
**that** the open- and/or closed-loop control unit (38) is integrated in a valve sensor unit (28) which is arranged substantially outside the pneumatic spring (10), in particular on the cover plate (16).

## Revendications

1. Dispositif de mesure avec un piston (21), ainsi qu'une tige de piston (20) d'un amortisseur de chocs (14) pour un ressort pneumatique (10), en particulier pour un véhicule, avec un élément de détection (48), pouvant être agencé sur le ressort pneumatique (10) et avec une partie de mesure (56), qui correspond à celui-ci, laquelle est mobile par rapport à l'élément de détection (48), moyennant quoi la partie de mesure (56) est affectée à la tige de piston (20) de l'amortisseur de chocs (14) et moyennant quoi un codage en longueur (54) de la partie de mesure (56) correspond à l'élément de détection (48), adjacent à la tige de piston (20,
**caractérisé en ce**
**que** le codage en longueur est un codage en longueur magnétique et
**que** la partie de mesure (56) est formée par une section de longueur de la tige de piston (20) elle-même, moyennant quoi il y a lieu de détecter un mouvement relatif entre la tige de piston (20) et l'élément de détection (48) pour déterminer une hauteur du ressort pneumatique (HR) du ressort pneumatique (10).

2. Dispositif de mesure selon la revendication 1,
**caractérisé en ce**
**que** le codage en longueur (54) comprend alternativement des sections magnétisées.

3. Dispositif de mesure selon la revendication 1 ou 2,
**caractérisé en ce**
**que** l'élément de détection (48) est constitué sans contact et comprend un détecteur de champ magnétique, en particulier un détecteur Hall.

4. Ressort pneumatique avec un dispositif de mesure (40) selon l'une des revendications 1 à 3.

5. Ressort pneumatique selon la revendication 4,
**caractérisé en ce**
**que** l'élément de détection (48) est agencé sur l'amortisseur de chocs (14) ou est intégré dans celui-ci.

6. Ressort pneumatique selon la revendication 5,
**caractérisé en ce**
**que** l'élément de détection (48) est agencé sur un couvercle (50) de l'amortisseur de chocs (14) ou est intégré dans celui-ci.

7. Ressort pneumatique selon l'une des revendications 4 à 6,
**caractérisé en ce**
**qu'**une unité de commande et / ou de réglage (38) est affectée au dispositif de mesure (40), laquelle unité est agencée à l'intérieur du ressort pneumatique (10) et affectée, en particulier, à une unité de détection de soupape (28), à l'intérieur du ressort pneumatique (10).

8. Ressort pneumatique selon l'une des revendications 4 à 7,
**caractérisé en ce**
**que** l'unité de commande et / ou de réglage (38) est reliée à l'élément de détection (48) par l'intermédiaire d'une ligne (70), laquelle évolue à l'intérieur du ressort pneumatique (10).

9. Ressort pneumatique selon la revendication 8,
**caractérisé en ce**
**que** l'élément de détection (48) est relié à une alimentation en courant par l'intermédiaire de la ligne (70).

10. Ressort pneumatique selon l'une des revendications 4 à 7,
**caractérisé en ce**
**que** l'unité de commande et / ou de réglage (38) est reliée à l'élément de détection (48) par l'intermédiaire d'une unité émetteur - récepteur (62).

11. Ressort pneumatique selon l'une des revendications 4 à 6,
**caractérisé en ce**
**qu'**une unité de commande et / ou de réglage (38) est affectée au dispositif de mesure (40), laquelle unité est agencée essentiellement à l'extérieur du ressort pneumatique (10), en particulier sur une plaque de recouvrement (16).

12. Ressort pneumatique selon la revendication 11,
**caractérisé en ce**
**que** l'unité de commande et / ou de réglage (38) est intégrée dans unité de détection de soupape (28), laquelle est agencée essentiellement à l'extérieur du ressort pneumatique (10), en particulier sur la plaque de recouvrement (16).
